# EUROPÄISCHE PATENTSCHRIFT

(11) **EP 1 149 723 B1**
(45) Veröffentlichungstag und Bekanntmachung des Hinweises auf die Patenterteilung: **27.09.2006**
(21) Anmeldenummer: 01108579.2
(22) Anmeldetag: 05.04.2001
(51) Int. Cl.: B60K 37/00, B62D 25/14

(54) **Stabilisiervorrichtung für eine in einem Kraftfahrzeug lageveränderlich angeordnete Armaturentafel**
Stabilising device for a dash board arranged position-adjustable in a vehicle
Dispositif de stabilisation pour un tableau de bord à position réglable dans un véhicule

(30) Priorität: 27.04.2000 DE 20007526 U
(43) Veröffentlichungstag der Anmeldung: 31.10.2001
(73) Patentinhaber: SIEMENS AKTIENGESELLSCHAFT, 80333 München (DE)
(72) Erfinder: Götz, Franz, 78050 Villingen-Schwenningen (DE); Funk, Stefan, Dipl.-Ing., 78050 Villingen-Schwenningen (DE)

(56) Entgegenhaltungen:
- DE-U- 29 521 414
- FR-A- 2 732 661
- FR-A- 2 781 189
- GB-A- 834 631
- US-A- 4 472 982

## Beschreibung

Die Erfindung betrifft eine Stabilisiervorrichtung für eine in einem Kraftfahrzeug lageveränderlich angeordnete Armaturentafel, welche einerseits mit einer das Lenkrad tragenden, axial verstellbar sowie schwenkbar gelagerten Lenksäule fest verbunden ist andererseits mittels der Stabilisiervorrichtung lageveränderlich gehaltert ist, wobei die Stabilisiervorrichtung einen an einem frontseitigen Rahmen der Fahrerkabine eines Fahrzeuges befestigbaren Träger umfasst, welcher mit parallel zueinander angeordneten, Verzahnungen tragenden Führungsschienen, in welchen parallel zu den Verzahnungen Kulissen ausgebildet sind, versehen ist, eine die Kulissen durchgreifende Stützwelle, auf der mit den Verzahnungen der Führungsschienen in Eingriff stehende Zahnräder befestigt sind, aufweist und eine auf der Stützwelle angeordnete, axial wirkende Spanneinrichtung zur Arretierung der Stützwelle zwischen den Führungsschienen beinhaltet,

Bekanntlich wird, um eine ergonomisch optimale Körperhaltung beim Führen eines Fahrzeugs zu erzielen, beispielsweise bei Omnibussen, insbesondere bei Linienbussen, bei denen die Fahrer häufig wechseln und auch Frauen als Fahrer tätig sein können, nicht allein eine Verstellbarkeit des Fahrersitzes vorgesehen sondern auch ein axiales Verstellen und Verschwenken des Lenkrades, und zwar gemeinsam mit der Armaturentafel des Fahrzeuges. Das heißt, es läßt sich mit dem gleichzeitigen Verstellen von Lenkrad und Armaturentafel für einen relativ großen Fahrer oder eine Fahrerin eine angehobene, weniger geneigte Lenkradposition sowie eine in gleicher Weise flach geneigte Instrumentenebene der Armaturentafel, für einen relativ kleinen Fahrer oder eine Fahrerin eine abgesenkte, stärker geneigte Lenkradposition sowie eine in gleicher Weise steiler stehende Instrumentenebene der Armaturentafel erzielen. Dabei ist aber zu berücksichtigen, dass die Armaturentafel von Omnibussen, allgemein gesagt von Nutzfahrzeugen, mit einer Spannweite von größenordnungsmäßig 900 mm und einem zu bewegenden Gewicht von 25 kp, eine relativ große, weit ausladende Masse darstellt, die nicht nur leicht und insbesondere verkantungsfrei verstellbar sein sollte sondern auch schwingungssicher aufgehängt werden muss.

Mit einer geeigneten Stabilisiervorrichtung, wie sie im Oberbegriff des Anspruchs 1 beschrieben ist, wird eine Armaturentafel relativ breit abgestützt und bei einer Lageänderung der aus Lenksäule und Armaturentafel gebildeten Baueinheit ein Verkanten vermieden. Das heißt, die mit einer Zahnrad/Zahnstangen-Verbindung kombinierte Kulissenführung der jeweiligen Führungsschienen bewirkt ein gleichmäßiges Verteilen der beim Heben und Senken sowie beim Verschwenken der Lenksäule/Armaturentafel-Baueinheit auftretender Kräfte. Der Stabilisiervorrichtung ist auch die Arretierung der Lenksäule/Armaturentafel-Baueinheit zugeordnet indem auf der Stützwelle ein federbelastetes, pneumatisch lösbares Spannelement lose aufgenommen ist, wobei der Kraftfluß über von der Stützwelle gehalterte Spannhülsen, die Führungsschienen, die Zahnräder und die auf Zug belastete Stützwelle geschlossen ist.

Eine derartige Vorrichtung ist aus der DE-U-29521414 bekannt.

Das Einsatzgebiet für eine in der beschriebenen Weise lageveränderlich verstellbare Armaturentafel setzt bekanntlich eine hohe Funktionssicherheit bei möglichst niedrigen Kosten, Serienfertigungsfähigkeit und relativ leichte Montierbarkeit voraus. Hinzu kommt, dass ausfallgefährdete Bauteile, wie beispielsweise das Spannelement, auf einfache Weise ausgetauscht werden können, wobei das für die Verstellbarkeit der Armaturentafel erforderliche axiale Spiel ohne nennenswerten Aufwand einstellbar ist. Aufgabe der vorliegenden Erfindung war es daher, eine an sich bekannte Stabilisiervorrichtung konstruktiv dahingehend zu überarbeiten, dass die Herstellkosten merklich reduziert sind.

Die Lösung der gestellten Aufgabe ist durch die Merkmale des Anspruchs 1 gekennzeichnet. Ein bevorzugtes Ausführüngsbeispiel zeichnet sich dadurch aus, dass jeweils an den Enden der Stützwelle ein verdrehsicherndes Profil ausgebildet ist, dass die Zahnräder ausschließlich steckbar mit der Stützwelle verbindbar sind und dass Mittel zur axialen Sicherung der Zahnräder auf der Stützwelle vorgesehen sind.

Ein bevorzugtes Ausführungsbeispiel zeichnet sich ferner dadurch aus, dass die axiale Sicherung der Zahnräder durch jeweils eine mit der Stützwelle verbindbare Anschlagmutter erfolgt, welcher eine Verdrehsicherung zugeordnet ist, wobei als Verdrehsicherung für die Anschlagmuttern Sicherungsscheiben vorgesehen sind, dass an jeder Sicherungsscheibe ein Arm ausgebildet ist, dass an den Zahnrädern eine mit den Armen verdrehsichernd zusammenwirkende Struktur angeformt ist und dass an den Sicherungsscheiben jeweils wenigstens ein Lappen derart ausgebildet ist, dass er in eine formschlüssige Verbindung mit der jeweiligen Anschlagmutter bringbar ist.

Die übrigen Unteransprüche beschreiben zweckmäßige Ausgestaltungen der Erfindung.

Der entscheidende Vorteil, den die Erfindung bietet, ist insbesondere darin zu sehen, dass die Verzahnungen unmittelbar an den Führungsschienen ausgebildet und die Führungsschienen zur Schaffung des Eingriffs mit den auf der Stützwelle angeordneten Zahnrädern parallel zu den Kulissen um 180° umgebogen sind. Zusätzliche an den Führungsschienen zu montierende Zahnstangen, wie sie der Stand der Technik vorsieht, sind aufgrund der Erfindung nicht mehr erforderlich. Außerdem wird eine erhebliche Versteifung der Führungsschienen, für die wegen des engen Biegeradius und einer relativ großen Blechstärke von größenordnungsmäßig 4 mm vorzugsweise ein feinkörniger Stahl in Anwendung kommt, erzielt.

Im übrigen ist es zur Geräuschminderung aber auch aus Kostengründen angezeigt, die Zahnräder aus Kunststoff spritzgießtechnisch herzustellen, wobei in den Zahnrädern metallische Zentrierbuchsen eingebettet sind. Die Verbindung zwischen der Stützwelle und den Zahnrädern ist, um eine absolute Verdrehsicherung zu erzielen, formschlüssig ausgeführt, beispielsweise sind die Enden der Stützwelle als D-Profil ausgebildet und dementsprechend die Zentrierbuchsen der Zahnräder mit Öffnungen D-förmigen Querschnitts versehen. Dadurch ergibt sich eine einfache Montage und für den Fall, dass das Spannelement ausgetauscht werden muss, eine leichte Lösbarkeit der Zahnräder.

Die erfindungsgemäße, bevorzugte Anordnung der Zahnräder auf der Stützwelle, die zur axialen Sicherung der Zahnräder jeweils eine auf die Stützwelle aufgeschraubte Anschlagmutter sowie jeweils eine Anschlagmutter und Zahnrad formschlüssig verbindende als Verdrehsicherung dienende Sicherungsscheibe vorsieht, gestattet außerdem ein zügiges und feinfühliges Einstellen des für die Funktion der Stabilisiervorrichtung entscheidenden axialen Spiels zwischen den Zahnrädern und den Führungsschienen.

Im folgenden sei die Erfindung anhand der beigefügten Zeichnungen näher erläutert.

Es zeigen:
- Figur 1: eine Übersichtsdarstellung der erfindungsgemäßen Lenksäule/Armaturentafel-Baueinheit in einer Seitenansicht,
- Figur 2: eine Seitenansicht der Stabilisiervorrichtung,
- Figur 3: eine Perspektivdarstellung der Stabilisiervorrichtung mit Blickrichtung auf die Befestigungsebene an einem fahrzeugfesten Rahmen gemäß Pfeil A,
- Figur 4: einen Teilschnitt der Stabilisiervorrichtung in der Ebene der Stützwelle,
- Figur 5: eine vergrößerte perspektivische Teildarstellung der Figur 3 mit Blickrichtung gemäß Pfeil B in Figur 3.

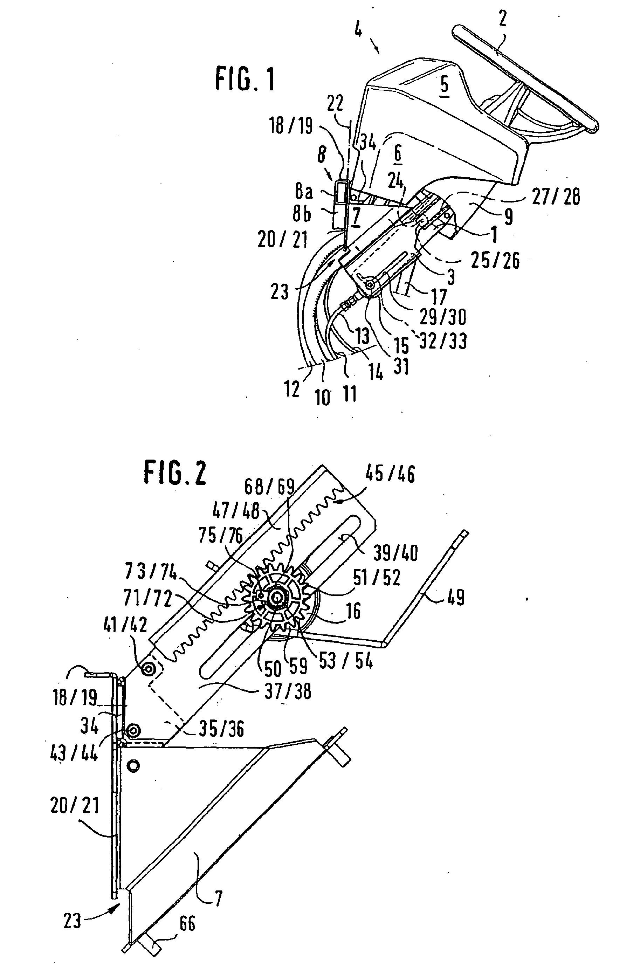

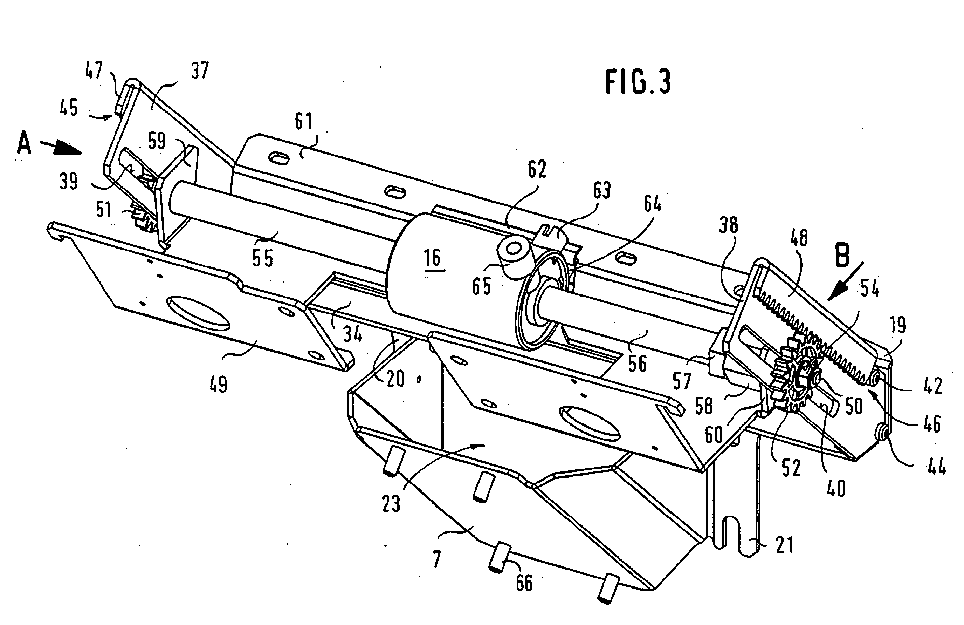

Wie aus der Übersichtsdarstellung, Figur 1, hervorgeht sind eine Lenksäule 1, in welcher die nichtdargestellte Welle eines Lenkrades 2 gelagert ist, bzw. ein der Lenksäule 1 zugeordneter Halterahmen 3 und eine Armaturentafel 4, deren die Anzeige- und Registrierinstrumente, Schalter und andere Steuerelemente aufnehmender Körper aus zwei Schalen 5, 6 zusammengefügt ist, einer Konsole 7 zugeordnet, welche sich an einem frontseitigen Rahmen 8 der Fahrerkabine des betreffenden Fahrzeuges abstützt und in geeigneter Weise, vorzugsweise mittels Schrauben, befestigt ist. Der genannte Rahmen 8 wird in diesem Falle gebildet von einem Querholm 8a der Fahrerkabine und von vorzugsweise zwei an dem Querholm 8a angeschweißten und zum Boden der Fahrerkabine reichenden Stützen 8 b. Mit 9 ist eine Verkleidung der Lenksäule 1 bezeichnet; bei den Bezugszeichen 10 und 11 handelt es sich um der Armaturentafel 4 zugeführte Lüftungsschläuche; 12 bezeichnet einen Schutzschlauch für die elektrischen Verbindungen der Armaturentafel 4. Zwei Leitungen 13 und 14 stellen Druckluftleitungen dar. Diese sind jeweils mit einem Spannelement 15 bzw. 16 (Figuren 2 und 3) verbunden, welche der Arretierung der Lenksäule/Armaturentafel-Baueinheit dienen. Mit 17 ist ein Element einer zum Lenkgetriebe führenden und mit der Welle des Lenkrades verbundenen Gelenkwelle bezeichnet. Vorzugsweise ist dieses Element der Gelenkwelle als eine mit einer Gasfeder versehene Teleskopwelle ausgebildet.

Der Vollständigkeit halber sei im Zusammenhang mit der Figur 1 erwähnt, dass an der Konsole 7 dem Anflanschen der Lenksäule/Armaturentafel-Baueinheit am Rahmen 8 dienende Halteleisten 18, 19 und Stützarme 20, 21 angeformt sind und mit 22 die Befestigungsebene der mit einem Kabel- und Luftschlauchkanal 23 versehenen Konsole 7 bezeichnet ist. Ferner sei zur Funktion der Baueinheit noch ausgeführt, dass das Verschwenken um eine lenksäulenfeste Drehachse 24 erfolgt, auf welcher beiderseits der beispielsweise als u-profilierter Körper ausgebildeten Lenksäule 1 als Laufrollen 25, 26 dienende Kugellager befestigt sind. Die Laufrollen 25, 26 greifen ihrerseits in im Halterahmen 3 als Nute 27, 28 ausgebildete Kulissen ein. Eine zweite Führung findet die Lenksäule 1 in ebenfalls im Halterahmen 3 angebrachten, als Schlitze 29, 30 ausgebildeten Kulissen, die unter Verwendung einer in beide Schlitze 29, 30 eingreifende, der Lenksäule 1 zugeordneten Achse 31 den Hub der Lenksäule 1 begrenzen. Die Achse 31 dient ihrerseits wiederum als Anschlag für die Schwenkbewegung der Lenksäule 1 indem die Achse 31 durch geeignete in den Seitenwänden der Lenksäule 1 vorgesehene Langlöcher 32, 33 durchgreift. Wie aus der Figur 1 ersichtlich ist, ist auf der Achse 31 das Spannelement 15 angeordnet, das der kraftschlüssigen Verbindung von Halterahmen 3 und Lenksäule 1 und somit der Arretierung der Lenksäule 1 in einer bestimmten Hub/Schwenkposition dient.

Mit 34 ist der Träger der der Lenksäule/Armaturentafel-Baueinheit zugeordneten Stabilisiervorrichtung bezeichnet. Die Befestigung des Trägers 34 an dem Rahmen 8 erfolgt gemeinsam mit der Konsole 7, wobei zweckmäßigerweise die Konsole 7 und der Träger 34 vormontiert werden. Im Fertigungszustand gemäß den Figuren 2 und 3 ist die Vormontage von Konsole 7 und Träger 34 unter Verwendung geeigneter Schraubverbindungen (strichpunktierte Linie in Figur 2) bereits erfolgt. An dem Träger 34, der als u-Profil ausgebildet und mit Schenkeln 35, 36 versehen ist, sind parallel zueinander Führungsschienen 37, 38 befestigt, in denen Kulissen 39, 40 ausgebildet sind. Mit 41, 42 und 43, 44 sind die für die Befestigung der Führungsschienen 37, 38 an dem Träger 34 vorgesehenen Schraubverbindungen bezeichnet. Außer den Kulissen 39, 40 sind unmittelbar an den Führungsschienen 37, 38 Verzahnungen 45, 46 ausgebildet, und zwar derart, dass sie gegen eine durch die Kulissen 39, 40 bestimmte Führungsebene weisen. Das heißt unter anderem, dass an den Führungsschienen 37, 38 die Verzahnungen 45, 46 tragende Zahnleisten 47, 48 biegetechnisch derart angeformt sind, dass die Verzahnungen 45, 46 und die Kulissen 39, 40 in parallelen Ebenen liegen. Mit 49 ist ein Lagerteil bezeichnet, welches einerseits der unteren Schale 6 der Armaturentafel 4 fest zugeordnet andererseits auf einer Stützwelle 50 schwenkbar gelagert ist. Letztere greift mit ihren Enden durch die Kulissen 39, 40 in den Führungsschienen 37, 38 hindurch und trägt mit den Verzahnungen 45, 46 in Eingriff stehende Zahnräder 51, 52, welche, was im folgenden noch näher erläutert wird, durch Anschlagmuttern 53, 54 axial gesichert sind.

Zur besseren Orientierung ist in der Figur 3 mit dem Pfeil A die Blickrichtung markiert, in der die Seitenansicht der Stabilisiervorrichtung gemäß Figur 2 zu sehen ist. Aus der Figur 3 ist außerdem noch ersichtlich, dass dem auf der Stützwelle 50 lose aufgesetzten Spannelement 16 Spannhülsen 55 und 56 zugeordnet sind, die ebenfalls lose auf der Stützwelle 50 gehaltert sind. Auf der Spannhülse 56, die mit einem nicht näher bezeichneten Gewinde versehen ist, sind gegeneinander konterbare Justiermuttern 57, 58 angeordnet, welche der Einstellung eines axialen Spiels der Kombination aus den Spannhülsen 55, 56 und dem Spannelement 16 zwischen den Führungsschienen 37, 38 von beispielsweise 0,2 mm dient. Mit 59 und 60 sind an dem Lagerteil 49 angeformte Lagerschenkel bezeichnet, über die die Armaturentafel 4 auf den Spannhülsen 55, 56 gelagert und somit gelenkig mit der Stützwelle 50 verbunden ist. An einer mit einer geeigneten Aussparung versehenen Befestigungsschiene 61 des Lagerteils 49 ist eine mit 62 bezeichnete, elastomere Leiste angebracht, die zwischen an dem Gehäuse des Spannelementes 16 angeformte Begrenzungsanschläge 63, 64 eingreift und auf diese Weise eine Drehbewegung des Spannelementes 16 auf der Stützwelle 50 relativ zu dem Lagerteil 49 verhindert. Ein mit einer nicht bezeichneten Öffnung versehener schematisch dargestellter Stutzen 65 dient dem Anschluß der Druckluftleitung 14. Einer der in der Konsole 7 eingepreßten, der Befestigung des Halterahmens 3 dienenden Gewindebolzen ist mit 66 bezeichnet.

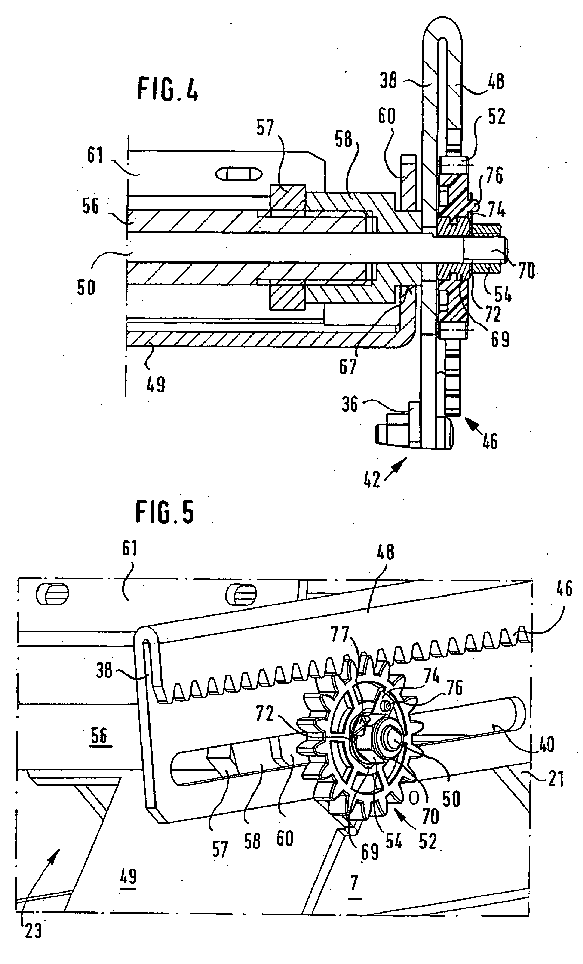

Aus dem Teilschnitt, Figur 4, ist ersichtlich, dass der eine Schenkel 60 des Lagerteils 49 lediglich indirekt auf der Spannhülse 56 nämlich auf einem an der Justiermutter 58 ausgebildeten Ansatz 67 gelagert ist. Ferner zeigt die Figur 4, dass die Enden der Stützwelle 50 jeweils mit einem D-Profil ausgebildet, mit anderen Worten mit jeweils einer nicht näher bezeichneten achsparallelen Fläche versehen sind, so dass die Zahnräder 51, 52 durch Aufstecken mit der Stützwelle 50 verbindbar sind und somit eine zuverlässige Verdrehsicherung zwischen der Stützwelle 50 und den Zahnrädern 51, 52 gegeben ist. Das heißt, die in die aus Kunststoff hergestellten Zahnräder 51, 52 als Insertteile eingebetteten Zentrierbuchsen 68, 69 sind mit Öffnungen D-förmigen Querschnitts versehen. Außerdem weisen die Enden der Stützwelle 50 den Anschlagmuttern 53, 54 zugeordnete Gewinde auf, von denen das in Figur 4 dargestellte mit 70 bezeichnet ist. Mit 71, 72 sind den Anschlagmuttern 53, 54 zugeordnete Sicherungsscheiben bezeichnet. An den Sicherungsscheiben 71, 72 ist jeweils ein Arm 73, 74 angeformt, der mit jeweils einem an den Zahnrädern 51, 52 angeformten Zapfen 75, 76 in Eingriff steht, wenn die Anschlagmuttern 53, 54 sich in der dem erforderlichen Spiel zwischen den Zahnrädern 51, 52 und den Führungsschienen 37, 38 entsprechenden Stellung befinden. Zur Sicherung der Anschlagmuttern 53, 54 dient ferner wenigsten ein an den Sicherungsscheiben 71, 72 ausgebildeter Lappen 77, (Figur 5), welcher mit der jeweiligen Anschlagmutter 53, 54 in eine formschlüssige Verbindung gebracht wird, wenn das Achsialspiel der Stützwelle 50 von größenordnungsmäßig 0,3 mm eingestellt ist. Im Gegensatz hierzu ist es denkbar, dass für das Einstellen des Achsialspiels und für die axiale Sicherung der Zahnräder 51, 52 jeweils zwei gegeneinander konterbare Muttern Anwendung finden.

Der Vollständigkeit halber sei nochmals betont, dass sowohl Achsialspiel zwischen den Führungsschienen 37, 38 und den Spannmitteln als auch zwischen den Führungsschienen 37, 38 und den auf der Stützwelle angebrachten Zahnrädern 51, 52 gegeben sein muss, um ein leichtes Verstellen der Lenksäule/Armaturentafel-Baueinheit zu erzielen. Das Gesamtspiel muss jedoch so bemessen sein, dass es kleiner ist als der mögliche Hub des Spannelementes, letzten Endes jedoch so klein, dass eine möglichst schnelle Arretierung und eine maximale Haltekraft erzielbar sind.

## Patentansprüche

1. Stabilisiervorrichtung für eine in einem Kraftfahrzeug lageveränderlich angeordnete Armaturentafel (4), welche einerseits mit einer das Lenkrad (2) tragenden, axial verstellbar sowie schwenkbar gelagerten Lenksäule (1) fest verbunden ist andererseits mittels der Stabilisiervorrichtung lageveränderlich gehaltert ist, wobei die Stabilisiervorrichtung einen an einem frontseitigen Rahmen (8, 8a) der Fahrerkabine eines Fahrzeuges befestigbaren Träger (34) umfasst, welcher mit parallel zueinander angeordneten Verzahnungen (45, 46) tragenden Führungsschienen(37, 38), in welchen parallel zu den Verzahnungen (45, 46) Kulissen (39, 40) ausgebildet sind, versehen ist, eine die Kulissen (39, 40) durchgreifende Stützwelle (50), auf der mit den Verzahnungen (45, 46) der Führungsschienen (37, 38) in Eingriff stehende Zahnräder (51, 52) befestigt sind, aufweist und eine auf der Stützwelle (50) angeordnete, axial wirkende Spanneinrichtung (53, 54) zur Arretierung der Stützwelle (50) zwischen den Führungsschienen (37, 38) beinhaltet,
**dadurch gekennzeichnet,**
**dass** die einer Führungsschiene (37, 38) zugeordnete Verzahnung (45, 46) unmittelbar an der Führungsschiene (37, 38) ausgebildet und die Führungsschiene (37, 38) derart geformt ist, dass die Verzahnung (45, 46) gegen die durch die Kulisse (39, 40) bestimmte Führungsebene der Stützwelle (50) weist, dass die Führungsschienen (37, 38) zur Schaffung des Eingriffs mit den auf der Stützwelle (50) angeordneten Zahnrädern (51, 52) parallel zu den Kulissen (39, 40) um 180° umgebogen sind.

2. Stabilisiervorrichtung nach Anspruch 1
**dadurch gekennzeichnet,**
**dass** jeweils an den Enden der Stützwelle (50) ein verdrehsicherndes Profil ausgebildet ist,
**dass** die Zahnräder (51, 52) ausschließlich steckbar mit der Stützwelle (50) verbindbar sind und
**dass** Mittel zur axialen Sicherung der Zahnräder (51, 52) auf der Stützwelle (50) vorgesehen sind.

3. Stabilisiervorrichtung nach Anspruch 2,
**dadurch gekennzeichnet,**
**dass** die axiale Sicherung der Zahnräder (51, 52) durch jeweils eine mit der Stützwelle (50) verbindbare Anschlagmutter (53, 54) erfolgt, welcher eine Verdrehsicherung zugeordnet ist.

4. Stabilisiervorrichtung nach Anspruch 1,
**dadurch gekennzeichnet,**
**dass** beide Führungsschienen (37, 38) unmittelbar an dem Träger (34) ausgebildet sind.

5. Stabilisiervorrichtung nach Anspruch 1,
**dadurch gekennzeichnet,**
**dass** der Träger (34) und die Führungsschienen (37, 38) aus Stahlblech geformt sind.

6. Stabilisiervorrichtung nach Anspruch 1,
**dadurch gekennzeichnet,**
**dass** die Zahnräder (51, 52) aus Kunststoff mit als Insertteile ausgebildete Zentrierbuchsen (68, 69) hergestellt sind, wobei die Zentrierbuchsen (68, 69) dem Profil der Stützwelle (50) entsprechende Öffnungen aufweisen.

7. Stabilisiervorrichtung nach Anspruch 3,
**dadurch gekennzeichnet,**
**dass** als Verdrehsicherung für die Anschlagmuttern (53, 54) Sicherungsscheiben (71, 72) vorgesehen sind,
**dass** an jeder Sicherungsscheibe (71, 72) ein Arm (73, 74) ausgebildet ist, **dass** an den Zahnrädern (51, 52) eine mit den Armen (73, 74) verdrehsichernd zusammenwirkende Struktur angeformt ist und
**dass** an den Sicherungsscheiben (71, 72) jeweils wenigstens ein Lappen (77) derart ausgebildet ist, dass er in eine formschlüssige Verbindung mit der jeweiligen Anschlagmutter (53, 54) bringbar ist.

## Claims

1. Stabilizing device for an instrument panel (4) which is arranged in a variable position in a motor vehicle and which, on the one hand, is firmly connected to a steering column (1) carrying the steering wheel (2) and mounted axially adjustably and pivotably and, on the other hand, is held in a variable position by means of the stabilizing device, the stabilizing device comprising a carrier (34) which is capable of being fastened to a front frame (8, 8a) of the driver's s cab of a vehicle and which is provided with guide rails (37, 38) carrying toothings (45, 46) arranged parallel to one another, in which guide rails slots (39, 40) are formed parallel to the toothings (45, 46), has a supporting shaft (50) engaging through the slots (39, 40) and having fastened on it gearwheels (51, 52) being in engagement with the toothings (45, 46) of the guide rails (37, 38), and contains an axially acting tension device (53, 54), arranged on the supporting shaft (50), for detaining the supporting shaft (50) between the guide rails (37, 38), **characterized in that** the toothing (45, 46) assigned to a guide rail (37, 38) is formed directly on the guide rail (37, 38), and the guide rail (37, 38) is formed in such a way that the toothing (45, 46) points towards the guide plane of the supporting shaft (50), the said guide plane being defined by the slot (39, 40), and **in that**, to provide engagement with the gearwheels (51, 52) arranged on the supporting shaft (50), the guide rails (37, 38) are bent round through 180° parallel to the slots (39, 40).

2. Stabilizing device according to Claim 1, **characterized in that** an anti-twist profile is formed at each of the ends of the supporting shaft (50), **in that** the gearwheels (51, 52) are connectable to the supporting shaft (50) solely in a pluggable manner, and **in that** means for securing the gearwheels (51, 52) axially are provided on the supporting shaft (50).

3. Stabilizing device according to Claim 2, **characterized in that** the axial securing of the gearwheels (51, 52) takes place in each case by means of a stop nut (53, 54) which can be connected to the supporting shaft (50) and which is assigned an anti-twist device.

4. Stabilizing device according to Claim 1, **characterized in that** the two guide rails (37, 38) are formed directly on the carrier (34).

5. Stabilizing device according to Claim 1, **characterized in that** the carrier (34) and the guide rails (37, 38) are formed from sheet steel.

6. Stabilizing device according to Claim 1, **characterized in that** the gearwheels (51, 52) are produced from plastic with centring bushes (68, 69) designed as insert parts, the centring bushes (68, 69) having orifices corresponding to the profile of the supporting shaft (50).

7. Stabilizing device according to Claim 3, **characterized in that** retaining washers (71, 72) are provided as an anti-twist device for the stop nuts (53, 54), **in that** an arm (73, 74) is formed on each retaining washer (71, 72), **in that** a structure cooperating in an anti-twist manner with the arms (73, 74) is integrally formed on the gearwheels (51, 52), and **in that** at least one tab (77) is formed on each of the retaining washers (71, 72) in such a way that the said tab can be brought into positive connection with the respective stop nut (53, 54).

## Revendications

1. Dispositif de stabilisation pour un tableau de bord (4) à position réglable monté dans un véhicule automobile, qui est, d'une part, fixé de manière rigide à une colonne de direction (1) portant le volant (2), laquelle est réglable dans le sens axial et orientable, et qui est, d'autre part, maintenu à position réglable au moyen du dispositif de stabilisation, où le dispositif de stabilisation comprend un support (34) pouvant être fixé à un cadre avant (8, 8a) de la cabine du conducteur d'un véhicule, doté de rails de guidage (37, 38) portant des dentures (45, 46) et disposés parallèlement l'une à l'autre et dans lesquels sont ménagées des coulisses (39, 40) parallèlement aux dentures (45, 46), comporte un arbre support (50) engagé dans les coulisses (39, 40), sur lequel sont fixées des roues dentées (51, 52) se trouvant en prise avec les dentures (45, 46) des rails de guidage (37, 38) et comprend un système de serrage (53, 54), monté sur l'arbre support (50) et agissant dans le sens axial, destiné à bloquer l'arbre support (50) entre les rails de guidage (37, 38),
**caractérisé par le fait**
**que** la denture (45, 46) correspondant à un rail de guidage (37, 38) est formée directement sur le rail de guidage (37, 38) et que le rail de guidage (37, 38) est conçu de manière telle que la denture (45, 46) est opposée au plan de guidage de l'arbre support (50) déterminé par la coulisse (39, 40), que les rails de guidage (37, 38) sont, pour réaliser la prise avec les roues dentées (51, 52) montées sur l'arbre support (50) sont coudés de 180° parallèlement aux coulisses (39, 40).

2. Dispositif de stabilisation selon la revendication 1,
**caractérisé par le fait**
**qu'**un profil antigiratoire est ménagé sur chaque extrémité de l'arbre support (50),
**que** les roues dentées (51, 52) sont liées à l'arbre support (50) uniquement par enfichage et
**que** des moyens sont prévus pour la fixation dans le sens axial des roues dentées (51, 52) sur l'arbre support (50).

3. Dispositif de stabilisation selon la revendication 2,
**caractérisé par le fait**
**que** la fixation dans le sens axial des roues dentées (51, 52) se fait, dans chaque cas, par un écrou de butée (53, 54) lié à l'arbre support (50) et qui comporte une sécurité antigiratoire.

4. Dispositif de stabilisation selon la revendication 1,
**caractérisé par le fait**
**que** les deux rails de guidage (37, 38) sont formés directement sur le support (34).

5. Dispositif de stabilisation selon la revendication 1,
**caractérisé par le fait**
**que** le support (34) et les rails de guidage (37, 38) sont formés en tôle d'acier.

6. Dispositif de stabilisation selon la revendication 1,
**caractérisé par le fait**
**que** les roues dentées (51, 52) sont fabriquées en matière plastique avec des douilles de centrage (68, 69) conçues comme pièces en insert, les douilles de centrage (68, 69) comportant des ouvertures correspondant au profil de l'arbre support (50).

7. Dispositif de stabilisation selon la revendication 3,
**caractérisé par le fait**
**qu'**il est prévu des rondelles de sécurité (71, 72) en tant que sécurité antigiratoire pour les écrous de butée (53, 54),
**qu'**un bras (73, 74) est ménagé sur chaque rondelle de sécurité (71, 72),
**qu'**une structure ayant, en action conjointe avec les bras (73, 74), une fonction antigiratoire est ménagée sur les roues dentées (51, 52) et
**que** au moins une languette (77) est ménagée sur chacune des rondelles de sécurité (71, 72) de façon telle qu'elle peut être mise en assemblage géométrique avec l'écrou de butée (53, 54) respectif.
